# DEMANDE DE BREVET EUROPEEN

(11) **EP 4 380 018 A1**
(43) Date de publication de la demande: **05.06.2024**
(21) Numéro de dépôt: 23212220.0
(22) Date de dépôt: 27.11.2023
(51) Int. Cl.: H02K 11/33, H02K 29/08, H02K 1/278, H02K 5/22, H02K 21/16

(54) **CARTE DE CIRCUIT IMPRIMÉ ÉLECTRONIQUE INTÉGRÉE DANS UN MOTEUR SANS BALAIS**

(30) Priorité: 30.11.2022 FR 2212552
(71) Demandeur: BHG, 68220 Attenschwiller (FR)
(72) Inventeur: DELPY, Vincent, 68510 SIERENTZ (FR)
(74) Mandataire: Cabinet Bleger-Rhein-Poupon

(57) **Abrégé**

Machine électrique tournante synchrone autopilotée comportant un stator (1) à enroulements statoriques (3) comportant trois ensembles de bobinage, un rotor (2) muni d'une couronne d'aimants (4) permanents sur sa périphérie et d'un arbre (6) rotatif axial. Le stator (1) et le rotor (2) étant logés dans un carter (5), comme une carte (30) à circuit imprimé, qui comporte les moyens électroniques de pilotage avec les moyens de génération d'un courant triphasé et les moyens de détection (31) de la position du rotor (2). La carte (30) est disposée parallèlement à l'axe de rotation du rotor (2) à l'extérieur du carter (5), mais enfichée dans une fente (21) d'un flasque (9) d'extrémités refermant le carter (5). La portion enfichée de la carte (30) comportant les pistes conductrices (32) pour le raccordement des bobinages statoriques et un capteur de détection (31) de champ magnétique vis-à-vis du rotor (2).

## Description

La présente invention a trait à une machine électrique tournante synchrone autopilotée, par exemple un moteur sans balais, qui comporte essentiellement un stator et un rotor muni d'aimants permanents périphériques, des moyens électroniques de pilotage comportant des moyens de génération d'un courant triphasé pour la création de champs magnétiques tournants dans le stator, et des moyens de détection de la position du rotor. L'ensemble stator/rotor est logé dans un carter relié à un arbre rotatif solidaire du rotor via des paliers ou des roulements disposés dans des flasques de part et d'autre dudit ensemble.

Dans un des usages préférentiels qui seront faits de l'invention, à savoir l'entraînement de volets roulants, l'espace dévolu au moteur d'entraînement du volet est spécifique à l'application : le moteur est placé à l'intérieur de l'enrouleur du volet, lequel est constitué d'un tube cylindrique creux. Pour s'adapter à cette configuration cylindrique, le carter du moteur se présente dès lors sous la forme d'un cylindre allongé dont les dimensions sont compatibles avec celles du volume cylindrique intérieur du tube d'enroulement du volet roulant.

Ce type de moteur est autopiloté, c'est-à-dire que la machine tournante dont il est question doit comporter un dispositif de commande électronique prévu pour générer les courants alternatifs nécessaires à la création des champs tournants par le stator en réponse à une information de positionnement du rotor. S'agissant de moteurs synchrones, il faut que l'induction magnétique générée par le stator reste constamment calée en fréquence par rapport au champ tournant créé par les aimants permanents du rotor.

En général, les moteurs sans balais comportent trois bobinages statoriques à plusieurs enroulements répartis sur le pourtour du stator, pour une commande de type triphasée qui permet d'atteindre un optimum entre puissance consommée, stabilité du couple moteur délivré et longueur de conducteur bobinée. Il faut alors assurer la commutation électronique de l'alimentation dans les enroulements statoriques, problème qui ne se pose évidemment pas dans les moteurs à courant continu à balais pour lesquels la commutation est mécanique, précisément assurée par les balais sur un collecteur.

Différentes techniques sont connues et déjà couramment appliquées pour l'alimentation du stator d'un moteur sans balais. Ces solutions sont de complexité, d'efficacité et de coût variables. Il est ainsi possible d'effectuer une commande par blocs qui alimentent successivement et de manière cyclique les enroulements de deux bobinages parmi les trois disponibles. Alternativement, il est aussi connu de mettre en oeuvre des commandes vectorielles séparant les flux magnétisants des flux générateurs de couple en se basant sur une modélisation mathématique du moteur, qui est rendue possible par des mesures physiques en temps réel.

Dans tous les cas, il est impératif de connaître la position du rotor en vue de générer le champ statorique adapté. Là encore, les solutions pratiques pour obtenir l'information sur la position instantanée du rotor sont nombreuses. Synthétiquement, elles se divisent en des configurations utilisant des capteurs ou des solutions basées sur des modèles mathématiques prédictifs traitant des signaux mesurables au niveau du moteur. Parmi les solutions à capteur(s), on peut citer l'utilisation de résolveurs, c'est-à-dire de transducteurs électromagnétiques traduisant le changement d'angle d'un rotor en une valeur électrique, ou l'emploi d'une bague magnétique associée à des capteurs sensibles au champ magnétique, par exemple des capteurs à effet Hall ou des capteurs magnéto-résistifs. Les capteurs utilisés peuvent aussi être des capteurs angulaires non magnétiques, notamment des capteurs optiques ou des capteurs de proximité classiques.

Si l'angle est estimé via un modèle mathématique prédictif, sa connaissance est basée sur des mesures de paramètres physiques liés au fonctionnement du moteur, de type tension ou courant, et sur la caractérisation précise du moteur utilisé. Dans le cas de la commande par blocs, l'estimation repose sur l'observation de la force contre-électromotrice qui apparaît sur les connexions du moteur non alimenté.

Quelle que soit la solution utilisée, le but est de connaître à tout moment la position du rotor, et d'adapter en conséquence l'alimentation des bobinages statoriques, et par conséquent les caractéristiques du champ magnétique tournant. Par exemple, lorsqu'un capteur détecte le changement de polarisation magnétique d'un aimant permanent du rotor qui passe à son niveau, le circuit de commande électronique procède à la commutation desdites bobines. Le rôle combiné de la détection et de la commande électronique vise à assurer les conditions d'un autopilotage optimal du moteur, ce qui revient en pratique à tenter de maintenir à chaque instant l'orthogonalité du flux magnétique statorique et du flux rotorique.

Les solutions sans capteurs peuvent certainement être vues comme économiquement avantageuses, car elles suppriment des composants, ce qui enlève dès lors la nécessité de leur intégration mécanique au système, mais cette suppression présente des inconvénients qui ne sont pas toujours anodins. Ainsi, l'estimation de l'angle rotorique nécessite la présence d'une force contre-électromotrice mesurable, condition qui n'advient qu'à une certaine vitesse de rotation. Le démarrage ne peut par conséquent s'effectuer qu'en boucle ouverte, avec réalignement et stabilisation ultérieures. Or, cette phase peut provoquer des vibrations et un comportement mal maîtrisé du moteur, allant jusqu'à une impossibilité de tourner si le démarrage s'effectue selon le couple nominal.

Les solutions à capteur(s) restent en pratique le gage de démarrages assurés et rapides quelle que soit la position initiale du rotor par rapport au stator. Mais la question de leur intégration mécanique se pose alors. Or, cette intégration matérielle est en général délicate, et parfois coûteuse. Ajouter un dispositif de mesure d'angle sur l'arbre rotatif du rotor nécessite en effet d'une part une indexation précise par rapport aux pôles magnétiques des aimants du rotor, et d'autre part une connexion physique avec l'électronique de commande. Cette connexion impose l'existence d'une connectique sous forme de câbles, nappes ou connecteurs multi-points, encombrants et susceptibles de réduire la fiabilité du système à long terme.

Pour simplifier autant que possible la structure, on a par exemple cherché à éviter d'équiper l'arbre de rotation et à mesurer directement le champ magnétique des aimants du rotor via un ou plusieurs capteurs magnétiques. Selon une configuration connue, ce ou ces capteurs peuvent être implantés sur un circuit imprimé spécifique disposé perpendiculairement à l'axe de rotation, en bout du stator. C'est par exemple la solution qui est décrite dans le document EP 3 109 983 au nom du présent déposant. Cette configuration impose cependant un surcoût principalement lié à ce circuit imprimé additionnel, et à la connectique qui reste à mettre en place pour le relier au circuit imprimé principal, celui de la carte électronique dévolue au pilotage de la machine.

Dans le contexte des moteurs tubulaires implantés dans des tubes enrouleurs creux, par exemple de volets roulants, la carte de commande principale est séparée du moteur, et positionnée dans le sens de la longueur dans le tube. Pour les puissances requises dans l'entraînement de volets roulants, il est en effet possible d'intégrer la commande électronique de pilotage dans le tube, sous la forme de cartes électroniques/circuits imprimés de tailles compatibles avec le volume interne cylindrique. La carte de commande séparée doit ensuite évidemment être reliée électriquement d'une part aux moyens de détection de l'ensemble stator/rotor, et d'autre part aux enroulements statoriques.

Plus précisément, dans certaines solutions connues, par exemple celle qui est décrite dans le document EP 3 109 983 déjà mentionné, les moyens de détection de la position rotorique sont implantés sur un circuit imprimé placé au voisinage du rotor mais structurellement séparés de lui, un flasque supportant un palier étant interposé entre l'ensemble stator/rotor et ledit circuit. Dans ce cas, la gestion et la mise en place des fonctions électroniques de détection est clairement conçue pour être séparée des fonctionnalités proprement mécaniques du moteur, le flasque délimitant les deux domaines.

En pratique, cette carte électronique de détection est orientée transversalement par rapport à l'arbre tournant, chaque capteur de ladite carte de détection étant positionné, dans une direction radiale, au niveau des aimants permanents périphériques du rotor. Cette carte est intégrée dans un carter englobant l'ensemble stator/rotor et le flasque de séparation puis, donc, l'électronique liée à la détection. Une connectique spécifique permet ensuite une liaison au circuit imprimé principal de commande, qui est classiquement placé en dehors dudit carter, dans le tube enrouleur.

Le document EP3349338A1 propose une configuration avec une carte électronique de pilotage séparée, raccordable via un connecteur spécifique dans un flasque équipant le carter du moteur électrique. La carte électronique de pilotage n'intègre cependant pas la partie mesure (capteur) de la position du rotor par rapport au stator, le capteur à effet hall utilisé à cet effet étant solidaire du moteur dans la solution présentée.

L'objectif de la présente invention est de simplifier la conception de l'ensemble en optimisant de manière encore bien plus aboutie la séparation des fonctions mécaniques et électroniques, de sorte qu'elles soient associables et dissociables à tout moment, au gré des besoins (installation, maintenance...). La conception de la partie électronique est par ailleurs telle que les liaisons électriques entre les différents étages électroniques permettant ensemble la commande du moteur autopiloté sans balais sont particulièrement robustes, et donc bien plus pérennes que dans les configurations existantes.

A cet effet, et en vue d'autres objectifs qui apparaîtront dans la suite, la machine électrique tournante synchrone autopilotée de l'invention, comporte classiquement :
- un stator à enroulements statoriques comportant trois ensembles de bobinage comportant chacun une ou plusieurs bobines,
- un rotor muni d'une couronne d'aimants permanents sur sa périphérie et d'un arbre rotatif axial,
- le stator et le rotor étant logés dans un carter,
- des moyens électroniques de pilotage comportant des moyens de génération d'un courant triphasé pour la création de champs magnétiques tournants dans le stator et des moyens de détection de la position du rotor,
- les moyens électroniques de pilotage étant placés sur une carte à circuit imprimé disposée parallèlement à l'axe de rotation du rotor à l'extérieur du carter.

Elle est telle que ladite carte est enfichée dans une fente d'un flasque refermant le carter à l'une de ses extrémités axiales, la portion enfichée de la carte comportant d'une part des pistes conductrices pour le raccordement avec les bobinages statoriques et d'autre part un capteur de détection de champ magnétique placé radialement au niveau et devant l'extrémité de la couronne d'aimants permanents du rotor.

Cette configuration permet de séparer la partie stator/rotor d'une part, et la totalité de l'électronique de pilotage incluant le capteur de détection d'autre part, qui relèvent à présent de deux ensembles distincts associables et dissociables à tout moment. La nature distincte de ces deux ensembles physiques constitue notamment un avantage lors de la fabrication, dans la mesure où les opérations visant à leur réalisation sont complètement indépendantes et peuvent se faire à des moments et en des emplacements séparés. Le moteur proprement dit, dans son carter, est limité à l'ensemble stator/rotor, alors que la carte de pilotage électronique complète est une unité séparée intégrable sans outil dans le carter, par simple enfichage mécanique. En termes de maintenance, la configuration proposée est également très avantageuse, le moteur ne devant par exemple pas être démonté si un problème électronique est détecté : il suffit de déposer la carte électronique en la tirant axialement, toujours sans outil, puis de la tester à part.

Dans l'invention, l'indépendance du capteur par rapport au moteur, puisqu'il est fixé à une carte mécaniquement séparable du moteur, impose de garantir que son positionnement par rapport au rotor soit assuré lors de l'installation de la carte, afin de permettre un fonctionnement correct du pilotage du moteur. La fente du flasque est dès lors une caractéristique importante de l'invention examinée, puisqu'elle permet la solidarisation au bloc moteur de la carte électronique de telle sorte que le positionnement du capteur magnétique par rapport aux aimants permanents du rotor soit correctement effectué, à proximité de leurs extrémités axiales.

Dans l'usage préférentiel mentionné auparavant pour l'invention, à savoir l'entraînement de volets roulants, Il faut évidemment pouvoir insérer/manipuler/sortir l'ensemble constitué du moteur d'entraînement et des moyens électroniques de pilotage quelles que soient la configuration et les dimensions disponibles à l'intérieur de l'enrouleur du volet, c'est-à-dire dans le tube cylindrique creux. Il est donc nécessaire que les dimensions globales de l'ensemble, lorsqu'il est monté, soient compatibles avec celles du volume cylindrique intérieur du tube.

En pratique, la carte comporte, dans sa portion enfichée, une patte dépassant axialement sur laquelle est placé le capteur de détection, de manière à pouvoir placer ledit capteur dans une position optimale par rapport aux aimants du rotor, pour lui permettre de réaliser au mieux sa fonction de détection de la position dudit rotor.

Plus précisément, la configuration est la suivante, selon l'invention : le flasque comporte deux parties, une première partie en regard du rotor et du stator comportant des moyens de guidage des fils des enroulements statoriques et des pièces rigides de raccordement de chaque bobinage, et une seconde partie emboîtée axialement dans la première, comportant la fente d'enfichage de la carte électronique, des moyens de liaison entre lesdites pièces de raccordement et les pistes conductrices de la carte, les deux parties comportant chacune un passage en direction du rotor pour la patte comportant le capteur de détection.

Les deux parties du flasque effectuent en fait un interfaçage électrique entre la carte de pilotage et les enroulements des bobinages statoriques qui est réalisé principalement par des liaisons mécaniques fonctionnant sans outils.

De préférence, et plus précisément, la première partie est solidarisée à l'arbre rotatif du rotor, et conformée en auge circulaire dont la paroi périphérique cylindrique comporte, sur sa face externe, des rainures de guidage des conducteurs issus des enroulements des bobinages et, dépassant du fond de l'auge dans une direction axiale au niveau de la face interne de la paroi périphérique, pour chaque bobinage, une pièce d'accostage en matériau rigide conducteur, à laquelle le conducteur issu d'un bobinage est fixé, le fond de l'auge comportant un orifice de passage de la patte comportant le capteur de détection.

Les lyres de raccordement de la première partie du flasque - qui est au contact de l'ensemble moteur - se développent en direction de la seconde partie, la plus extérieure, du flasque, et sont destinés à réaliser par contacts mécaniques la liaison électrique avec des parties conductrices de ladite seconde partie qui seront examinées dans la suite.

Selon une configuration possible, cette seconde partie comporte :
- un manchon d'allure cylindrique emboîté dans l'auge de la première partie, définissant un espace intérieur,
- un fond muni d'une fenêtre pour le passage de la patte portant le capteur de détection et, dans la paroi périphérique du manchon, des fenêtres donnant accès aux pièces d'accostage de la première partie et, à l'opposé du fond,
- une collerette comportant les extrémités de la fente d'enfichage de la carte.

La seconde partie est ensuite munie de moyens de réaliser, toujours mécaniquement, des liaisons électriques avec la carte électronique de pilotage placée à l'extérieur.

Plus précisément, selon une possibilité, elle comporte à cet effet des lames conductrices de liaison entre lesdites pièces d'accostage et les contacts de la carte, et des moyens de solidarisation desdites lames à la seconde partie, lesdites lames comportant chacune :
- une portion de fixation se coinçant entre d'une part la face interne du manchon et les pièces d'accostage, et d'autre part un muret d'appui dépassant du fond ;
- une portion terminale en étrier positionnée dans des encoches parallèles pratiquées dans un bloc occupant une fraction de l'espace intérieur de la seconde partie et comportant une partie de la fente, lesdites encoches étant pratiquées de part et d'autre de ladite fente, la carte s'enfichant entre les jambes de la portion terminale en étrier de sorte que l'une d'entre elles soit au contact d'une piste conductrice de la carte ; et
- une portion médiane rejoignant les deux portions précédentes.

Ces lames conductrices, de forme complexe, sont donc fixées dans la seconde partie du flasque et relient électriquement les lyres - elles-mêmes connectées aux bobinages du stator - à une zone de la fente en regard des pistes conductrices de la carte, lorsque celle-ci est enfichée. Chaque lame est en fait reliée d'un côté à une lyre, donc à un bobinage, et de l'autre à une piste de la carte de pilotage sur laquelle elle s'applique avec un contact par frottement. L'alimentation en courant de chaque bobinage, selon un signal triphasé, est donc possible via une série de liaisons mécaniques qui garantissent la connexion électrique.

Pour une solidarisation optimisée de ces lames à la seconde partie du flasque, selon une configuration possible, les lames conductrices présentent une portion plane munie d'un orifice et fixée en appui sur la face frontale de la collerette par insertion d'un ergot dépassant de ladite face frontale dans ledit orifice.

Il y a donc plusieurs zones de fixation des lames conductrices, qui garantissent un positionnement stable desdites lames, nécessaire pour assurer une bonne connexion électrique dans la chaîne de liaisons entre les bobinages statoriques et les pistes conductrices de la carte électronique de pilotage du moteur.

D'autres buts et avantages de la présente invention apparaîtront au cours de la description qui va suivre, se rapportant à des modes de réalisation qui ne sont donnés qu'à titre d'exemples indicatifs. La compréhension de cette description sera en particulier facilitée en référence aux figures jointes en annexe et dans lesquelles :
La [Fig.1] montre une vue en perspective partielle d'une machine tournante synchrone autopilotée selon l'invention, sans le flasque qui fait notamment l'objet de l'invention, mais dans la position relative que prendrait la carte et l'ensemble stator-rotor en présence dudit flasque ;
La [Fig.2] représente une autre perspective partielle de la machine tournante de l'invention équipée du flasque de l'invention, montrant la carte électronique enfichée dans le flasque ;
La [Fig.3] est une vue de face de la [Fig.2] ;
La [Fig.4] montre la même perspective de la machine tournante que celle de la [Fig.1], avec le flasque partiellement coupé ;
La [Fig.5] représente encore cette perspective de la machine tournante, avec la première partie du flasque partiellement coupé ;
La [Fig.6] est identique à la [Fig.5], avec une représentation mettant en évidence les lames conductrices de raccordement entre les bobinages du stator et la carte électronique ; et
La [Fig.7] montre toujours sensiblement la même perspective, avec le flasque partiellement coupé éclaté en ses deux parties constitutives.

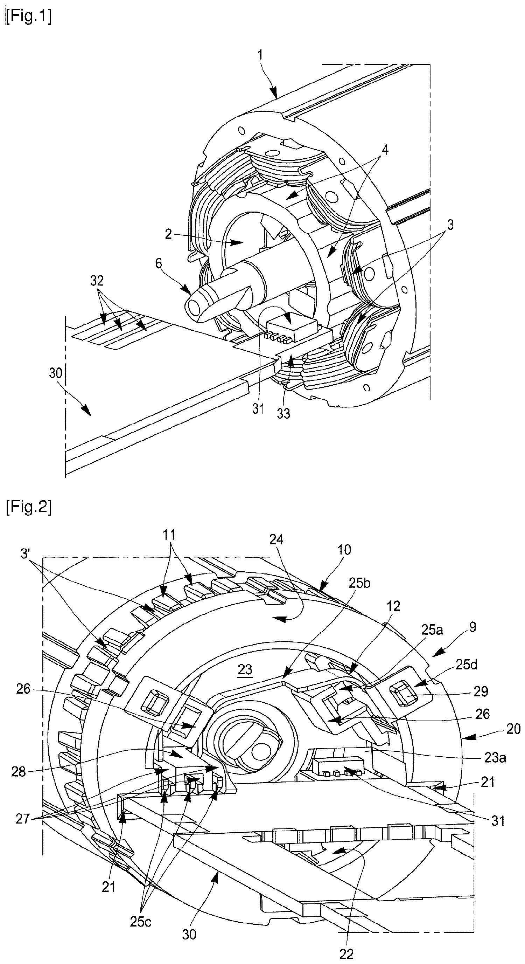

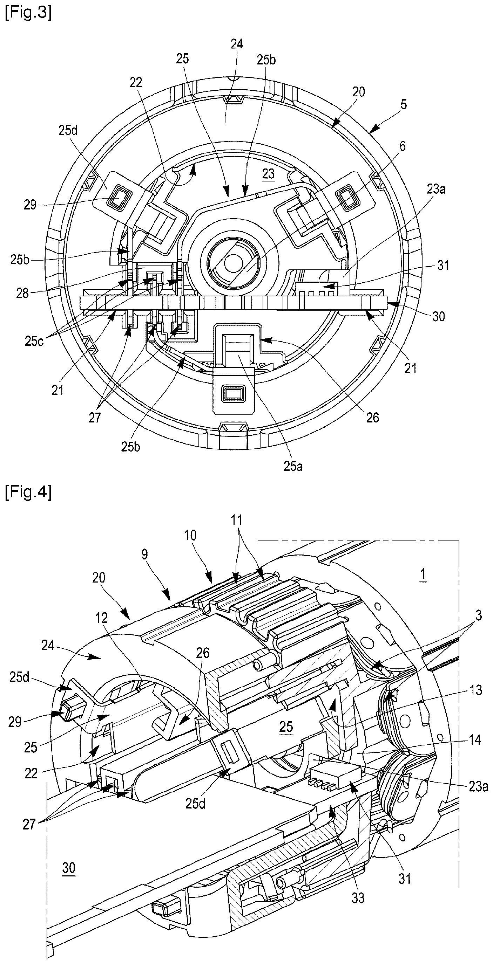

En référence aux figures, le moteur proprement dit est considéré comme constitué à titre principal de l'ensemble stator (1)/rotor (2), le stator (1) étant muni des enroulements (3) des bobinages statoriques, plus précisément constitués de trois ensembles de bobinage comportant chacun une ou plusieurs bobines (le fonctionnement est triphasé). Le rotor (2) comporte une couronne d'aimants permanents (4) périphériques (ou de sections angulaires aimantées périphériques) apparaissant bien sur la [Fig.1], aimants (4) dont les polarités (S, N) sont successivement inversées, changeant d'un aimant (4) à l'aimant adjacent. Ce moteur est placé dans un carter (5) représenté uniquement en [Fig.3], dont un flasque (9) terminal constitué de deux parties (10, 20) apparaît aux [Fig.2] et [Fig.4] , laissant passage à un arbre (6) solidaire du rotor (2).

Un palier ou un roulement est classiquement interposé entre le flasque (9) et l'arbre (6), assurant une liaison mécanique fonctionnelle entre le carter (5) fixe comportant des flasques d'extrémité d'une part et l'arbre (6) tournant avec le rotor (2) d'autre part. La carte (30) à circuit imprimé intégrant les composants électroniques des moyens de pilotage du moteur est située à l'extérieur : elle fait cependant partie de la machine tournante de l'invention, et comporte notamment le capteur (31) de détection de champ magnétique permettant de détecter la position du rotor (2).

La carte (30) comporte des pistes conductrices (32) prévues pour être mises en contact avec les bobinages statoriques (3), au nombre de trois pour un fonctionnement en triphasé, le bobinage de chaque phase comportant en l'espèce trois enroulements (3) répartis sur la périphérie interne du stator (1) selon une répartition périodique successive des bobinages des trois phases. Le composant de détection (31), par exemple un capteur à effet Hall, se trouve sur une patte (33) qui fait saillie ou dépasse du reste de la carte (30) dans une direction axiale qui est celle de l'enfichage de la carte (30), de manière à ce qu'en position enfichée de la carte (30), le capteur (31) se trouve radialement au niveau de la couronne d'aimants permanents (4) du rotor (2), immédiatement devant lesdits aimants (4) qui défilent pendant la rotation du rotor (2). La [Fig.1] montre la position précise de la carte (30) lorsqu'elle est enfichée dans le flasque (9).

Ce flasque (9) est composé de deux parties (10, 20) (voir en particulier en [Fig.4]), une première partie (10) en regard du rotor (2) et du stator (1) du moteur électrique, et une seconde partie (20) emboîtée dans la première et qui gère la liaison mécanique avec la carte (30) : c'est cette seconde partie (20) qui comporte la fente (21) d'enfichage de la carte (30).

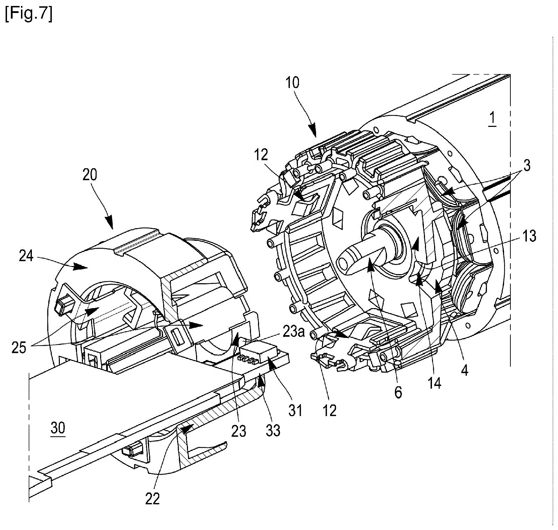

La première partie (10), montée sur l'arbre (6) via un palier ou un roulement, prend la forme d'une auge circulaire (voir en particulier en [Fig.4]) dont la face externe de la paroi périphérique présente des rainures de guidage (11) pour les fils (3') des enroulements (3) des trois bobinages du moteur. Le montage des bobinages des trois phases du stator (2) est en triangle, et les trois conducteurs de liaison issus desdits bobinages, qui doivent être reliés à l'étage de pilotage électronique extérieur, sont raccordés à des pièces d'accostage rigides (12) (voir en particulier en [Fig.7]) et conductrices.

Ces pièces d'accostage (12) sont placées à 120° l'une de l'autre au voisinage de la paroi périphérique de la première partie (10). Le fond (23) et la paroi périphérique de la seconde partie (20) comportent des fenêtres de passage de ces pièces (12) (voir en particulier en [Fig.3]), qui dépassent/affleurent périphériquement par conséquent dans l'espace intérieur de la seconde partie (20) du flasque (9), en vue d'être électriquement connectées à des pièces de liaison (25) avec les pistes conductrices (32) de la carte (30) électronique de pilotage.

Le fond (13) de la première partie (10) comporte un orifice (14) de passage de la patte (33) de la carte (30) munie du capteur (31) à effet Hall, orifice (14) dimensionné pour permettre le passage de cette patte (33) et situé radialement en face de la couronne d'aimants (4) permanents du rotor (2). Le détecteur (31) de champ magnétique est donc bien lui-même situé devant et en face desdits aimants (4), à leur proximité immédiate. Il est ainsi positionné pour assurer sa fonction de détection du champ magnétique.

La seconde partie (20) du flasque (9) s'emboîte dans la première partie (10), dans le volume cylindrique intérieur délimité par la forme en auge de celle-ci. Cette seconde partie comporte un manchon (22) d'allure cylindrique, un fond (23) et une collerette (24) délimitant ensemble un espace intérieur d'allure cylindrique. La collerette (24) comporte les extrémités latérales de la fente rectiligne (22).

Lorsque la seconde partie (20) est insérée dans la première partie (10), comme déjà mentionné, les fenêtres pratiquées dans la paroi périphérique du manchon (22) permettent le passage/l'affleurement périphérique des pièces d'accostage (12) érigées perpendiculairement au fond (13) de la première partie (10), contre la paroi périphérique de celle-ci, et qui se retrouvent alors positionnées et accessibles au niveau de la face interne du manchon (22) lorsqu'il est inséré dans la première partie (10). Le fond (23) du manchon (22) présente aussi une fenêtre (23a) de passage de la patte (33) de la carte (30) portant le capteur (31), fenêtre (23a) qui s'aligne devant l'orifice (14) pratiqué dans le fond (13) de la première partie (10).

Le volume intérieur de la seconde partie (20) du flasque (9) comporte par ailleurs des lames conductrices (25) de formes complexes, qui sont solidarisées à l'intérieur de cette partie (20) et font la liaison électrique entre les pièces d'accostage (12) de la première partie (10) - auxquelles les fils des bobinages statoriques sont reliés - et les pistes conductrices de la carte (30). Lorsque la seconde partie (20) du flasque (9) est emboîtée dans la première partie (10), et que la carte (30) comprenant l'électronique de pilotage y est enfichée, la continuité électrique entre l'électronique de la carte (30) et les bobinages statoriques est assurée par ces lames (25), et le pilotage de la machine tournante synchrone de l'invention peut avoir lieu.

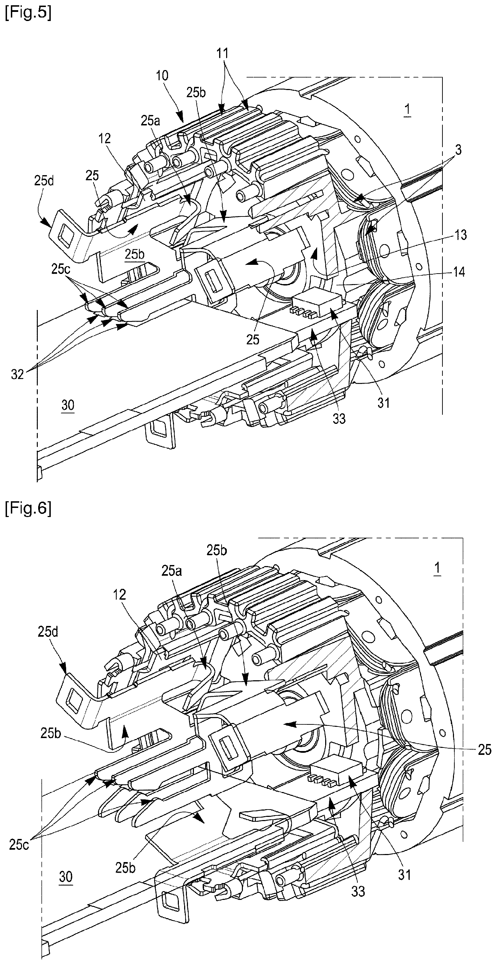

Les trois lames conductrices (25), qui apparaissent plus clairement en [Fig.6], présentent d'abord une portion de fixation (25a) se coinçant entre la face interne du manchon (22), les pièces d'accostage (12) et un muret d'appui (26) dépassant du fond. Cette portion de fixation (25a) est en U, avec un premier pan au niveau de la face interne du manchon (22) pressé au contact d'une pièce d'accostage (12), et un second pan en regard du premier qui est en appui contre le muret d'appui (26), de telle sorte qu'une pression élastique peut être exercée contre la pièce d'accostage (12).

Ces lames (25) présentent, à une autre extrémité, une portion terminale en étrier (25c), particulièrement bien visible en [Fig.6], dans laquelle la carte électronique (30) est représentée transparente. Ces portions terminales en étrier (25c) sont placées dans des encoches (27) parallèles pratiquées dans un bloc (28) occupant une fraction de l'espace intérieur de la seconde partie (20). Ce bloc (28) comporte et délimite une partie de la fente (21), dans l'espace intérieur. Les encoches (27) sont pratiquées de part et d'autre de la fente (21), de sorte que la carte peut s'insérer entre les jambes de l'étrier (25c), l'une d'entre elles étant alors placée au contact d'une piste conductrice lorsque la carte (30) est correctement enfichée. Dans chaque lame (25), une portion médiane (25b) rejoint la portion de fixation (25a) en U et la portion terminale (25c) en étrier. Ces portions médianes (25b) sont de taille et d'orientations différentes, et permettent de réaliser la liaison entre les pièces d'accostage (12), placées à 120° l'une de l'autre, et les encoches (27) bordant la fente (21), groupées à l'endroit où se situent les pistes conductrices (32) de la carte (30) lorsqu'elle est enfichée dans la fente (21).

Outre la fixation au niveau de la portion en U (25a), les lames conductrices (25) présentent une portion plane (25d) munie d'un orifice, formant un coude avec la portion en U (25a) et fixée en appui sur la face frontale de la collerette (24). La fixation se fait par insertion d'un ergot (29) dépassant de ladite face frontale dans ledit orifice. Cette portion coudée (25d) réalise un blocage de la lame (25) dans le plan de la face frontale de la collerette (24), et fait butée axiale à l'insertion de ladite lame (25).

Les exemples de configuration qui font l'objet des figures ne doivent pas être considérés comme exhaustifs de l'invention, qui englobe au contraire des variantes de structure, touchant par exemple à la disposition du capteur (31) et des pistes conductrices (32), à la forme et à la position de la patte (33) de la carte (30), etc.

## Revendications

1. Machine électrique tournante synchrone autopilotée comportant :
- un stator (1) à enroulements statoriques (3) comportant trois ensembles de bobinage comportant chacun une ou plusieurs bobines,
- un rotor (2) muni d'une couronne d'aimants (4) permanents sur sa périphérie et d'un arbre (6) rotatif axial,
- le stator (1) et le rotor (2) étant logés dans un carter (5),
- des moyens électroniques de pilotage comportant des moyens de génération d'un courant triphasé pour la création de champs magnétiques tournants dans le stator (1) et des moyens de détection (31) de la position du rotor (2),
- les moyens électroniques de pilotage étant placés sur une carte (30) à circuit imprimé disposée parallèlement à l'axe de rotation du rotor (2) à l'extérieur du carter (5),
**caractérisée en ce que** ladite carte (30) est enfichée dans une fente (21) d'un flasque (9) refermant le carter (5) à l'une de ses extrémités axiale, la portion enfichée de la carte (30) comportant d'une part des pistes conductrices (32) pour le raccordement avec les bobinages statoriques et d'autre part un capteur de détection (31) de champ magnétique placé radialement au niveau et devant l'extrémité de la couronne d'aimants (4) permanents du rotor (2).

2. Machine électrique tournante selon la revendication précédente, **caractérisée en ce que** la carte (30) comporte, dans sa portion enfichée, une patte (33) dépassant axialement sur laquelle est placé le capteur de détection (31).

3. Machine électrique tournante selon la revendication précédente, **caractérisée en ce que** le flasque (9) comporte deux parties (10, 20), une première partie (10) en regard du rotor (2) et du stator (1) comportant des moyens de guidage des fils des enroulements statoriques (3) et des pièces rigides de raccordement de chaque bobinage, et une seconde partie (20) emboîtée axialement dans la première (10), comportant la fente (21) d'enfichage de la carte électronique (30), des moyens de liaison (25) entre lesdites pièces de raccordement et les pistes conductrices (32) de la carte (30), les deux parties (10, 20) comportant chacune un passage (14, 23a) en direction du rotor (2) pour la patte (33) comportant le capteur de détection (31).

4. Machine électrique tournante selon la revendication précédente, **caractérisée en ce que** la première partie (10) est solidarisée à l'arbre (6) rotatif du rotor (2), et conformée en auge circulaire dont la paroi périphérique cylindrique comporte, sur sa face externe, des rainures (11) de guidage des conducteurs (3') issus des enroulements (3) des bobinages et, dépassant du fond (13) de l'auge dans une direction axiale au niveau de la face interne de la paroi périphérique, pour chaque bobinage, une pièce d'accostage (12) en matériau rigide conducteur, à laquelle le conducteur (3') issu d'un bobinage est fixé, le fond (13) de l'auge comportant un orifice (14) de passage de la patte (33) comportant le capteur de détection (31).

5. Machine électrique tournante selon la revendication précédente, **caractérisée en ce que** la seconde partie (20) comporte :
- un manchon (22) d'allure cylindrique emboîté dans l'auge de la première partie (10), définissant un espace intérieur,
- un fond (23) muni d'une fenêtre (23a) pour le passage de la patte (33) portant le capteur de détection (31) et, dans la paroi périphérique du manchon (22), des fenêtres donnant accès aux pièces d'accostage (12) de la première partie (10) du flasque (9) et, à l'opposé du fond (23),
- une collerette (24) comportant les extrémités de la fente d'enfichage (21) de la carte (30).

6. Machine électrique tournante selon la revendication précédente, **caractérisée en ce que** la seconde partie (20) comporte des lames conductrices (25) de liaison entre lesdites pièces d'accostage (12) et les contacts (32) de la carte (30), et des moyens de solidarisation (26, 26a, 26b, 28) desdites lames (25) à la seconde partie (20), les lames (25) comportant chacune :
- une portion de fixation (25a) se coinçant entre d'une part la face interne du manchon (22) et les pièces d'accostage (12), et d'autre part un muret (26) d'appui dépassant du fond (23) ;
- une portion terminale (25c) en étrier positionnée dans des encoches (27) parallèles pratiquées dans un bloc (28) occupant une fraction de l'espace intérieur de la seconde partie (20) et comportant une partie de la fente (21), lesdites encoches (27) étant pratiquées de part et d'autre de ladite fente (21), la carte (30) s'enfichant entre les jambes de la portion terminale (25c) en étrier de sorte que l'une d'entre elles soit au contact d'une piste conductrice (32) de la carte (30) ; et
- une portion médiane (25b) rejoignant les deux portions (25a, 25c) précédentes.

7. Machine électrique tournante selon la revendication précédente, **caractérisée en ce que** les lames conductrices (25) présentent une portion plane (25d) munie d'un orifice et fixée en appui sur la face frontale de la collerette (24) par insertion d'un ergot (29) dépassant de ladite face frontale dans ledit orifice.
